# EUROPEAN PATENT APPLICATION

(11) **EP 0 788 264 A2**
(43) Date of publication of application: **06.08.1997**
(21) Application number: 97101542.5
(22) Date of filing: 31.01.1997
(51) Int. Cl.: H04L 27/26, H04L 5/06

(54) **OFDM transmitter and OFDM receiver**

(30) Priority: 31.01.1996 JP 16028/96
(71) Applicant: KABUSHIKI KAISHA TOSHIBA, Kawasaki-shi (JP)
(72) Inventor: Seki, Takashi, 1-1 Shibaura 1-chome Minato-ku Tokyo 105 (JP); Taga, Noboru, 1-1 Shibaura 1-chome Minato-ku Tokyo 105 (JP); Ishikawa, Tatsuya, 1-1 Shibaura 1-chome Minato-ku Tokyo 105 (JP)
(74) Representative: Henkel, Feiler, Hänzel & Partner

(57) **Abstract**

To transmit one of OFDM transmission signals of different systems having the same carrier interval and different band widths (f1 > f2 > ··· > fn), where the one OFDM transmission signal has a band width f2 - fn, a reference symbol generator 104 generates, as a reference symbol, that part of the frequency-base data of a sine sweep signal of a band width f1 which is identical to part of the frequency-base data a sine sweep signal f2, ···, or fn. A multiplexer 105 multiplexes the reference symbol and a plurality of information symbols into an OFDM frame. OFDM modulation sections 106 and 107 subject the frame to OFDM modulation, and an orthogonal modulator 108 subjects the modulated frame to quadrature modulation. As a result, a sine sweep signal with time-base data partially common to sine sweep signals included in the OFDM transmission signals is periodically transmitted.

## Description

This invention relates to an OFDM (Orthogonal Frequency Division Multiplex) transmission system for transmitting a digital signal using an OFDM modulation system, and more particularly to an OFDM transmitter and an OFDM receiver for transmitting a plurality of OFDM signals of different band widths.

In the field of transmission of voice signals and image signals, digital modulation systems have recently been developed vigorously. In the digital terrestrial broadcast, in particular, attention has been paid to an OFDM modulation system which has a high resistance to multi-pass disturbance and a high frequency use efficiency. For particulars concerning the OFDM modulation system, see the document "Mobile Digital Voice Broadcast Using OFDM" published in magazine "VIEW" vol. 5, 1993 issued from NHK (Nippon Hoso Kyokai).

In the OFDM transmission system, modulation/demodulation of data items is performed by assigning the data items to a plurality of orthogonal carriers from each other. To perform this, a plurality of symbol data items are subjected to IFFT (Inverted Fast Fourier Transformation) on the transmitter side, and received data items are subjected to FFT (Fast Fourier Transformation) on the receiver side.

To perform FFT demodulation on the receiver side, however, it is necessary to detect the timing of an OFDM symbol. To this end, in general, a reference symbol for timing synchronization is periodically transmitted from the transmitter side.

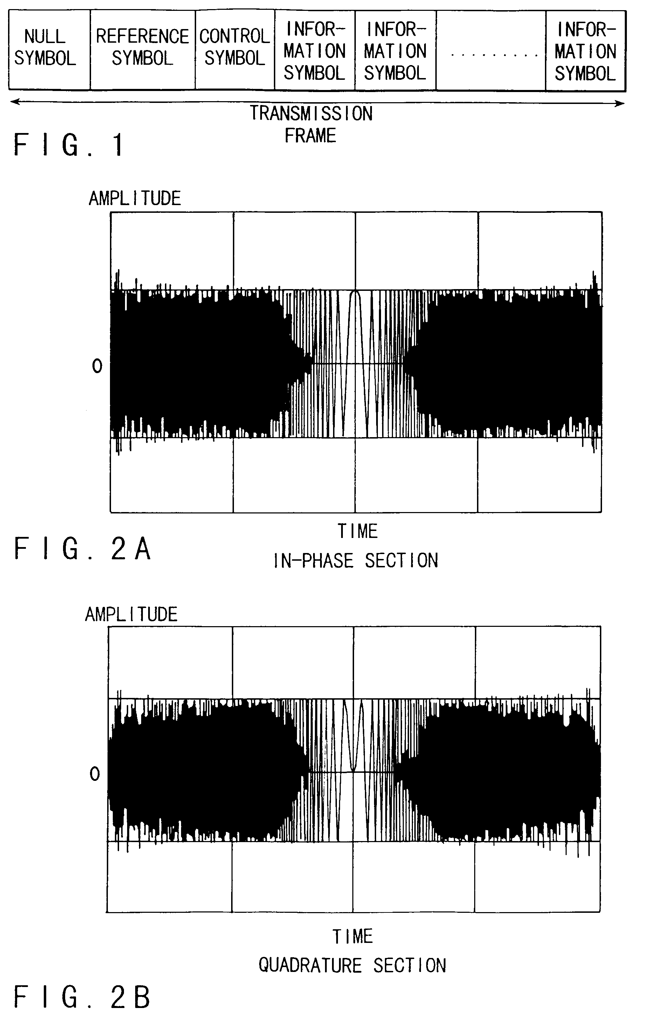

To transmit the reference symbol, a transmission frame consisting of a plurality of OFDM symbols as shown in FIG. 1 is formed. A non-signal area, called a "null symbol", is formed as a front end (or first) portion of the transmission frame. On the receiver side, the front end portion of the frame is detected by detecting the null symbol, with the result that a clock signal generated in the receiver is made to be roughly synchronized with the symbol timing.

The reference symbol for timing synchronization is transmitted as a second portion of the frame. On the receiver side, the timing of the symbol is accurately detected by detecting the reference symbol. A control symbol indicative of additional information such as a transmission parameter is transmitted as a third portion of the frame.

A sine sweep wave is used as an example of the reference symbol for timing synchronization. As is shown in FIGS. 2A (IN-PHASE section) and 2B (QUADRATURE section), the sine sweep wave is a complex sine wave whose frequency linearly varies with lapse of time. Since this wave shows high auto-correlation, the symbol timing can be detected by detecting correlation between a sine sweep wave included in the received signal and a sine sweep wave included in the clock signal generated in the receiver.

A problem the invention to solve, which may be raised in the aforementioned timing synchronizing method using a reference symbol and employed in the OFDM transmission system, will be described.

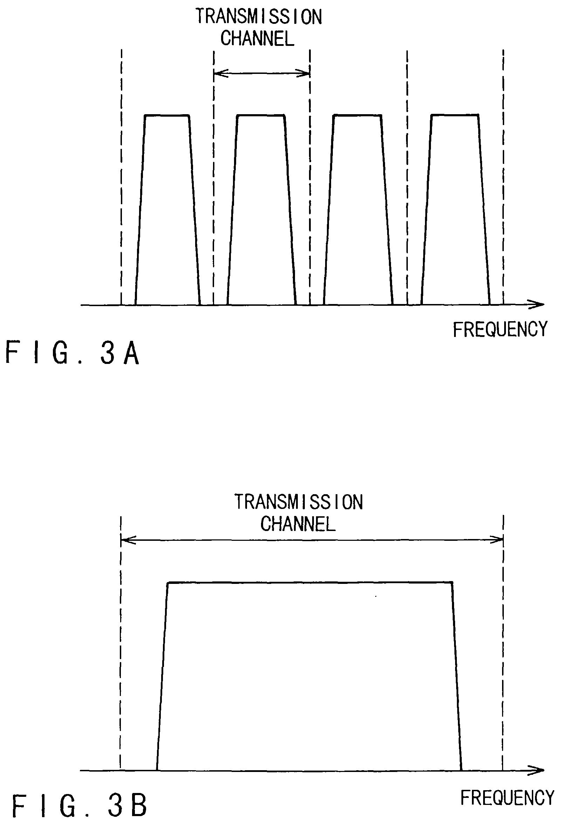

In digital broadcast using the OFDM transmission system, the band width of a transmission channel may differ, for example, between the digital sound (audio) broadcast and the digital TV broadcast as shown in FIGS. 3A and 3B.

At the time of watching and listening to these broadcasts, an OFDM receiver corresponding to each transmission band width is used. It is desirable that an apparatus capable of receiving an OFDM signal of a wide band width can also receive an OFDM signal of a narrow band width. For example, if a receiver adapted to the digital TV broadcast has an OFDM demodulator common to the digital TV broadcast and the digital sound broadcast, it can also receive the digital sound broadcast.

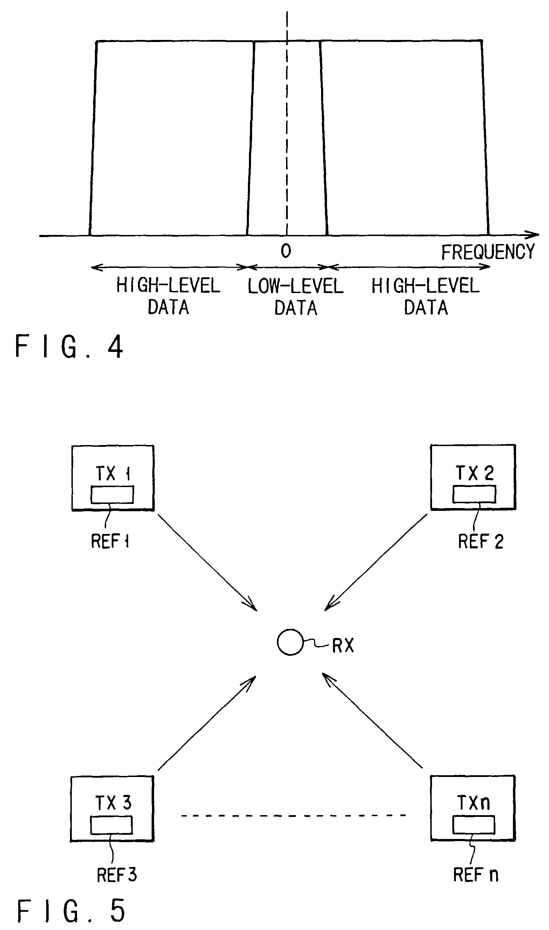

Moreover, where an OFDM signal of a wide band width contains hierarchized data as shown in FIG. 4, it is desirable that even a receiver for receiving an OFDM signal of a narrow band width can demodulate high priority data. For example, if a receiver adapted to the digital sound broadcast has an OFDM demodulator common to the digital TV broadcast and the digital sound broadcast, it can be also used as a simplified receiver for receiving the digital TV broadcast.

To realize a receiver capable of demodulating a plurality of OFDM signals of different band widths, it is necessary to impart to the apparatus a function for detecting the timing of any one of the OFDM signals.

Since, however, the conventional OFDM transmitter and receiver use a reference symbol dedicated to each OFDM signal, a timing synchronization circuit for detecting the timing of each reference symbol is necessary in order to realize an OFDM receiver capable of receiving a plurality of OFDM signals of different band widths.

The present invention has been developed to solve the above-described problem, and aims to provide an OFDM transmitter and an OFDM receiver, which enable the timing of each of a plurality of OFDM signals of different band widths to be detected by a common circuit on the receiver side.

According to a first aspect of the invention, there is provided an OFDM transmitter for transmitting one of OFDM (Orthogonal Frequency Division Multiplex) transmission signals of different systems with the same carrier interval and different band widths, including: reference symbol generation means (104) for generating, as a reference symbol, frequency-base data of a sine sweep signal waveform corresponding to a band width assigned to the reference symbol generation means; multiplexing means (105) for multiplexing the reference symbol output from the reference symbol generation means and a plurality of information symbols in the form of an OFDM transmission frame; OFDM modulation means (106) for subjecting the output of the multiplexing means to OFDM modulation to create an OFDM signal with a base band; quadrature modulation means (108) for subjecting to quadrature modulation the OFDM signal with the base band output from the OFDM modulation means; and transmission means (109, 110) for transmitting the output of the quadrature modulation means as the one OFDM transmission signal;
characterized in that the reference symbol generation means (104) generates, as the reference symbol, frequency-base data obtained by extracting part of the frequency-base data of a predetermined sine sweep signal waveform in accordance with the band width assigned to the reference symbol generation means so that a sine sweep signal included in the one OFDM transmission signal contains time-base data, part of which data is identical to part of time-base data contained in each of the other OFDM transmission signals of different systems.

The OFDM transmitter constructed as above is used, for example, as a system for transmitting one of OFDM transmission signals of different systems having different band widths (f1 > f2 > ··· > fn). Where the one OFDM transmission signal has a band width f2 - fn, reference symbol generation means generates, as a reference symbol, that part of the frequency-base data of a sine sweep signal of a band width f1 which is identical to part of the frequency-base data a sine sweep signal f2, ···, or fn. Multiplexer means multiplexes the reference symbol and a plurality of information symbols into an OFDM frame. OFDM modulation means subjects the frame to OFDM modulation, and quadrature modulation means subjects the modulated frame to quadrature modulation. As a result, a sine sweep signal with time-base data partially common to sine sweep signals included in the OFDM transmission signals is periodically transmitted.

According to a second aspect of the invention, there is provided an OFDM receiver for selectively receiving one of OFDM (Orthogonal Frequency Division Multiplex) transmission signals of different systems, which have the same carrier interval, different band widths and sine sweep signals as reference symbols containing partially the same time-base data,
characterized by comprising:
quadrature detection means (606) for subjecting a received one of the OFDM transmission signals of different systems to quadrature detection to thereby convert the received OFDM signal to an OFDM signal with a base band;
first filter means (607, 608) for performing band limitation of the output of the quadrature detection means (606) using a band width determined on the basis of the number of the Fourier transformation points at the time of OFDM demodulation;
time-base data generation means (621) for generating at least time-base data common to the sine sweep signals included in the OFDM transmission signals of different systems;
timing signal reproduction means (618 - 620) for detecting a sine sweep signal included in the received OFDM signal by detecting the correlation between the output of the first filter means (607, 608) and the output of the time-base data generation means (621), thereby reproducing, from the detected sine sweep signal, the symbol timing and the clock of the received OFDM signal; and
demodulation means (609 - 613) for subjecting the output of the filter means (607, 608) to Fourier transformation using the Fourier transformation points on the basis of the symbol timing and the clock reproduced by the timing signal reproduction means (618 - 620), thereby performing OFDM demodulation.

In the OFDM receiver constructed as above, an OFDM transmission signal received is converted to a signal with a base band by the quadrature detection means, and then subjected to band limitation using the filter means with a band width f1, f2, ···, or fn-1 determined by the number of FFT points. Further, the time-base data generation means generates time-base data common to the sine sweep signals of the OFDM transmission signals, and the timing signal reproduction means detects the correlation between the output of the filter means and the output of time-base data generation means to thereby detect the sine sweep signal of the received OFDM transmission signal and reproduce the symbol timing and the clock of the received OFDM transmission signal from the detected sine sweep signal. The demodulation means demodulates the output of the filter means on the basis of the reproduced symbol timing and clock. As a result, the OFDM receiver adapted to an OFDM signal with a band width f1 (f2, ···, or fn-1) can perform timing detection even if it receives an OFDM signal with a band width narrower than f1 (f2, ···, or fn-1), using common sine sweep time-base data.

This invention can be more fully understood from the following detailed description when taken in conjunction with the accompanying drawings, in which:
FIG. 1 is a view, showing a transmission frame employed in a general OFDM transmission system;
FIGS. 2A and 2B show an example of a sine sweep waveform used in the general OFDM transmission system;
FIGS. 3A and 3B are views, showing frequency spectrum distributions indicating examples of OFDM signals having different band widths;
FIG. 4 is a view, showing an example of an OFDM signal for transmitting hierarchized data;
FIG. 5 is a block diagram, showing the overall structure of an OFDM transmission system according to the invention;
FIG. 6 is a block diagram, showing an example of an OFDM transmitter incorporated in the OFDM transmission system of the invention;
FIGS. 7A and 7B are views, respectively showing the waveforms of the in-phase section and the quadrature section of a sine sweep signal, as frequency-base data, included in an OFDM signal transmitted from the OFDM transmitter when the number of FFT points is 2048 and the number of carriers is 1536;
FIGS. 8A and 8B are views, showing the waveforms of the in-phase section and the quadrature section of a signal as time-base data obtained by subjecting, to 2048-point-IFFT, the complex data of the sine sweep signal shown in FIGS. 7A and 7B;
FIGS. 9A and 9B are views, respectively showing the waveforms of the in-phase section and the quadrature section of a sine sweep signal, as frequency-base data, included in an OFDM signal transmitted from the OFDM transmitter when the number of FFT points is 512 and the number of carriers is 384;
FIGS. 10A and 10B are views, showing the waveforms of the in-phase section and the quadrature section of a signal as time-base data obtained by subjecting to 512-point-IFFT the complex data of the sine sweep signal shown in FIGS. 9A and 9B;
FIG. 11 is a block diagram, showing an example of an OFDM receiver incorporated in the OFDM transmission system of the invention;
FIGS. 12A and 12B are views, useful in explaining the operation of the OFDM receiver and showing the relationship between the correlation detecting range and a sine sweep wave obtained when the number of carriers is 1536;
FIGS. 13A and 13B are views, useful in explaining the operation of the OFDM receiver and showing the relationship between the correlation detecting range and a sine sweep wave obtained when the number of carriers is 384;
FIG. 14 is a block diagram, showing another example of the OFDM receiver incorporated in the OFDM transmission system of the invention;
FIG. 15 is a view, showing the relationship between the characteristics of a low-pass filter employed in the receiver of FIG. 14 and the range of demodulation by FFT;
FIG. 16 is a block diagram, showing a further example of the OFDM receiver incorporated in the OFDM transmission system of the invention;
FIG. 17 is a view, showing the relationship between the characteristics of a low-pass filter employed in the receiver of FIG. 16 and the range of demodulation by FFT;
FIG. 18 is a block diagram, showing yet another example of the OFDM receiver incorporated in the OFDM transmission system of the invention; and
FIG. 19 is a view, showing the transmission frame of an OFDM transmission system according to another embodiment of the invention.

Referring to FIGS. 5 - 18, the embodiments of the invention will be described in detail. In the embodiments stated below, OFDM signals with the same carrier interval and different band widths include an OFDM signal with 512 FFT points and 384 carries, and an OFDM signal with 2048 FFT points and 1536 carriers. Each OFDM signal has a transmission frame constituted by a plurality of OFDM symbols. The OFDM symbols include a null symbol as a front end portion of the frame, a reference symbol (a sine sweep symbol) for timing synchronization as a second portion, a control symbol as a third portion for transmitting control parameters indicative of the number of carriers, the length of a guard interval, and error correction, and information symbols as fourth et seq. portions.

FIG. 5 shows the overall structure of the OFDM transmission system of the invention. In FIG. 5, reference signs TX1 - TXn denote independent OFDM transmitters (for example, OFDM broadcasts) to which different band widths are assigned, reference sign RX an OFDM receiver located within the transmission range of the transmitters TX1 - TXn. The OFDM transmitters employ a system which has the same carrier interval and different band widths.

In order to receive an OFDM signal output from any one of the OFDM transmitters TX1 - TXn, the OFDM receiver RX needs to distinguish OFDM transmission signals from each other, and to make its own symbol timing and clock timing accurately synchronize with the each signal in accordance with a band width thereof.

In the conventional apparatus, however, the transmitters TX1 - TXn have their respective reference symbols for timing synchronization. Therefore, the receiver RX must have reference symbol generators respectively adapted to the OFDM signals. In light of this, in the present invention, the reference symbol generators REF1 - REFn of the transmitters TX1 - TXn are made to generate, as reference symbols, sine sweep signals wherein part of time-base data is commonly used. As a result, the receiver can perform timing synchronization using the common sine sweep signal, even when it receives any OFDM signal.

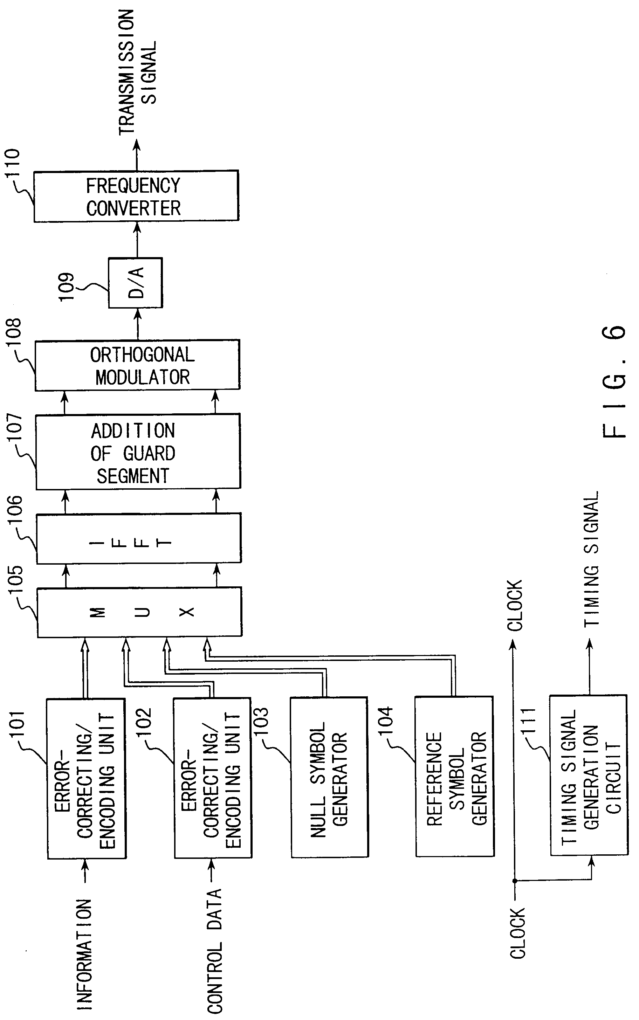

FIG. 6 is a block diagram, showing an example of an OFDM transmitter employed in the invention.

As is shown in FIG. 6, information is encoded into a modulated symbol in an error-correcting/encoding unit 101, and then input to a multiplexer (MUX) 105. Control data is encoded into a modulated symbol in an error-correcting/encoding unit 102, and then input to the multiplexer 105. The control data includes data indicative of the band width (the number of carriers) of an OFDM signal. In the case of transmission, for example, of an OFDM signal with 1536 carriers, the data indicative of the band width is carried by one of 384 carriers which are located at a center portion of the OFDM signal.

A null symbol generator 103 is provided for generating 0 data for creating a null symbol. The 0 data is input to the multiplexer 105. A reference symbol generator 104 is provided for generating the frequency-base data of a sine sweep signal. The frequency-base data is also input to the multiplexer 105. The manner of generating the sine sweep signal will be described later.

The multiplexer 105 multiplexes the input data items in the order of the null symbol, the sine sweep symbol, the control symbol and the information symbol, thereby to create a transmission frame. The output of the multiplexer 105 is supplied to an IFFT circuit 106.

The IFFT circuit 106 generates an OFDM modulated wave of a complex-base band by the IFFT calculation. If the number of carriers is 384, 512-point-IFFT is performed, while if the number of carriers is 1536, 2048-point-IFFT is performed. The output of the IFFT circuit 106 is supplied to a guard interval addition circuit 107.

The guard interval addition circuit 107 copies a rear end portion of an OFDM symbol as a guard interval in a front area of the OFDM symbol. The output of the guard interval addition circuit 107 is subjected to quadrature modulation using a carrier with a predetermined frequency by an orthogonal modulator 108, and then is converted to an analog signal by a digital/analog (D/A) converter 109. The output of the D/A converter 109 is converted to an RF signal as a result of frequency conversion by a frequency converter 110.

A clock signal for data processing is supplied to the above-mentioned circuits 101 - 109, and further to a timing signal generation circuit 111. The timing signal generation circuit 111 generates a predetermined timing signal on the basis of an input clock, and output it to the circuits 101 - 109. (In the case of 512-point-IFFT, the frequency of the clock signal is 1/4 of the clock frequency assumed in the case of 2048-point-IFFT.)

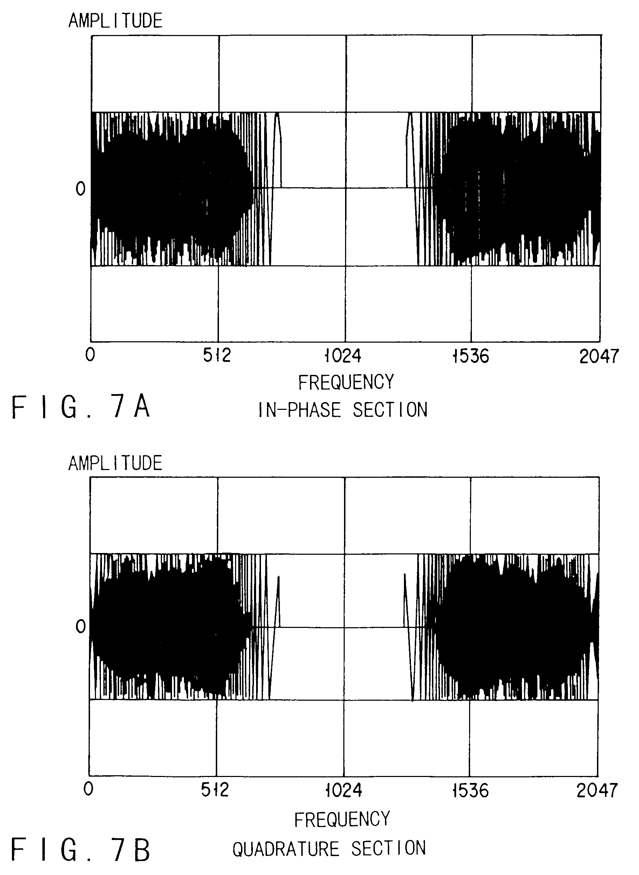

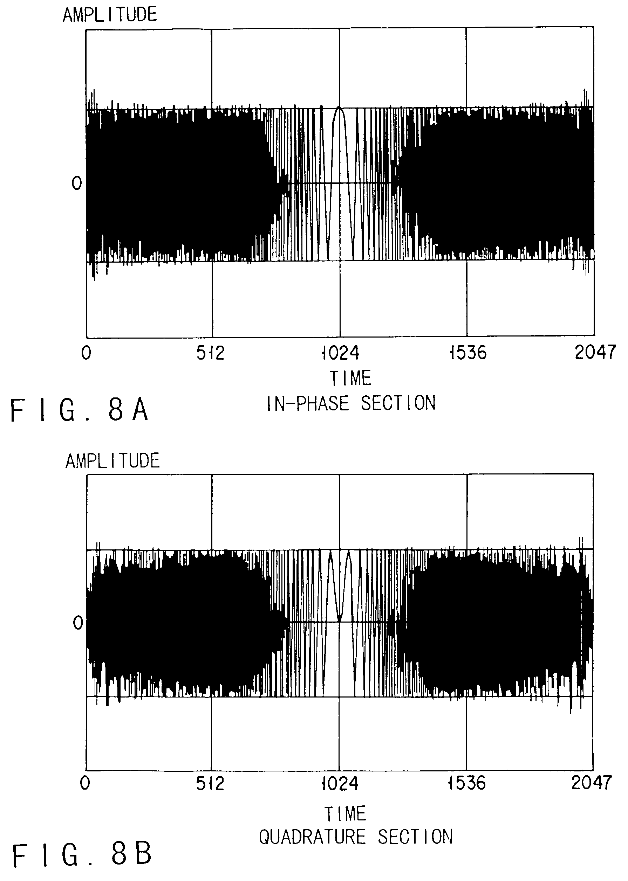

A method for generating the reference symbol in the OFDM transmitter of the invention will now be described. FIGS. 7A and 7B respectively show the frequency-base data items of the in-phase section and the quadrature section of a sine sweep signal obtained when the number of FFT points is 2048 and the number of carriers is 1536. Subjecting the complex data shown in FIGS. 7A and 7B to 2048-point-IFFT will provide the time-base data of the sine sweep signal shown in FIGS. 8A and 8B.

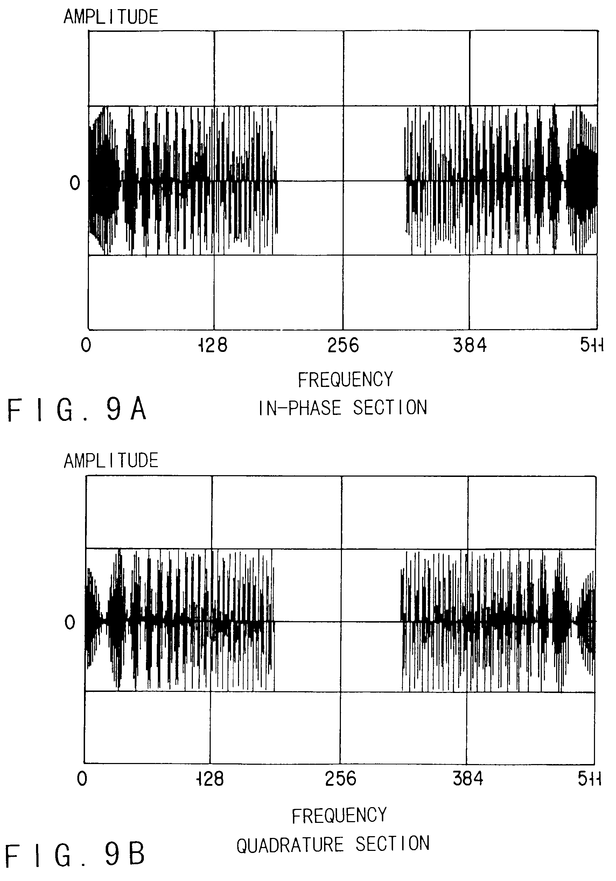

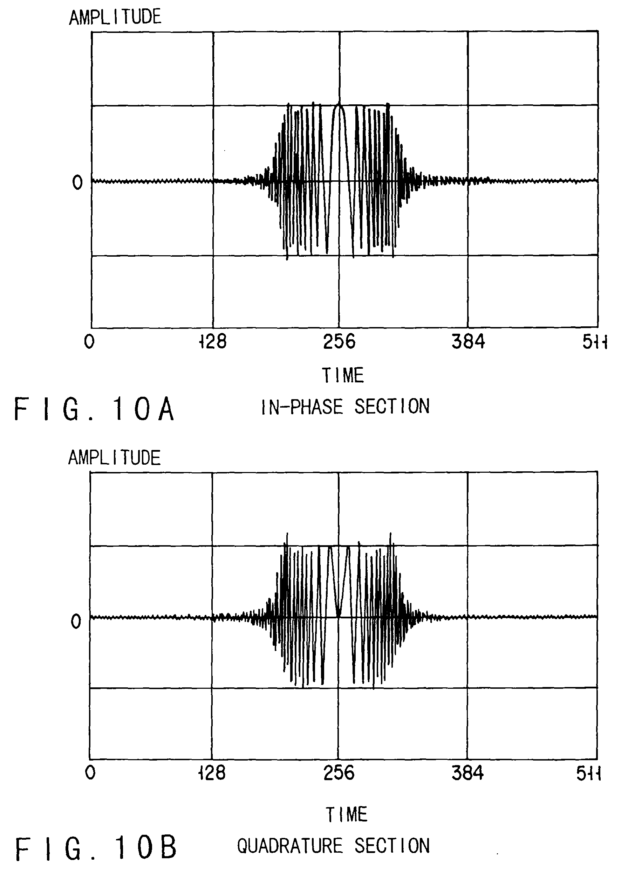

FIGS. 9A and 9B respectively show the frequency-base data items of the in-phase section and the quadrature section of a sine sweep signal obtained when the number of FFT points is 512 and the number of carriers is 384. The data items of FIGS. 9A and 9B have the same low frequency components (with numerals 0 - 191, 320 - 511) as the data items of FIGS. 7A and 7B. Subjecting the data items of FIGS. 9A and 9B to 512-point-IFFT with 1/4 of the clock frequency will provide the time-base data of the sine sweep signal shown in FIGS. 10A and 10B. As is evident from the comparison of FIGS. 8A and 8B with FIGS. 10A and 10B, the two sine sweep signals have substantially the same waveform at their time-base center portions.

Accordingly, at the time of transmitting OFDM signals of different band widths, the above-described OFDM transmitter can generate sine sweep signals with a common time-base waveform, using narrow-band portions of the frequency-base data items of sine sweep signals of wide band widths.

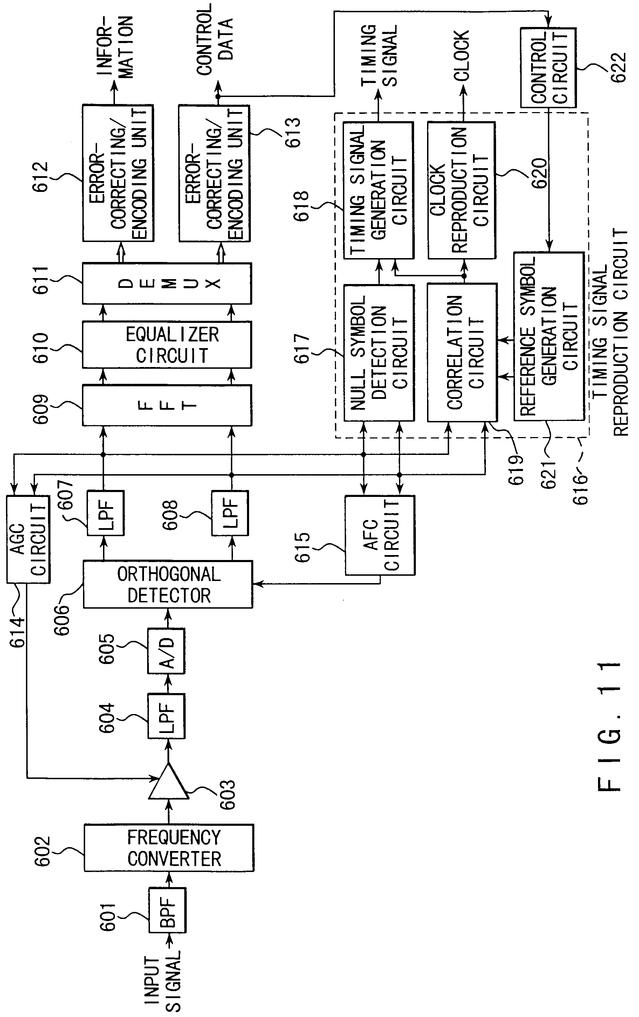

FIG. 11 is a block diagram, showing an example of an OFDM receiver according to the invention. This receiver has a 2048-point-FFT circuit and can demodulate both an OFDM signal with 1536 carriers and an OFDM signal with 384 carriers output from the OFDM transmitter shown in FIG. 6.

In the structure of FIG. 11, an input OFDM signal has its component outside a predetermined band removed by a band-pass filter (hereinafter referred to as "BPF") 601 corresponding to a transmission channel with 1536 carriers, and then is converted to a signal of a predetermined frequency by a frequency converter 602. The output of the frequency converter 602 is amplified by an amplifier 603, and subjected to band limitation in a low-pass filter (hereinafter referred to as "LPF") 604. Thereafter, the signal is converted to a digital signal by an analog/digital (hereinafter referred to as "A/D") converter 605. The output of the A/D converter 605 is input to an orthogonal wave detector 606.

The orthogonal wave detector 606 extracts an OFDM modulated wave of a base band by performing quadrature detection using a reproduced carrier. An in-phase detection signal (I-base signal) and a quadrature detection signal (Q-base signal) obtained by the orthogonal wave detector 606 are subjected to band limitation using LPFs 607 and 608, respectively, and then input to an FFT circuit 609.

The FFT circuit 609 performs FFT calculation of those effective symbols included in the input OFDM modulated wave which are other than guard interval. The output of the FFT circuit 609 has its deviation in amplitude and phase due to multi-pass, etc. corrected by an equalizer circuit 610. Then, information symbols and a control symbol included in the output are extracted and output by a demultiplexer (DEMUX) 611.

The information symbols extracted by the demultiplexer 611 are decoded by an error-correcting/decoding unit 612 and output as information signals. The control symbol from the demultiplexer 611 is input to an error-correcting/decoding unit 613, which in turn decodes the control symbol to thereby output control data.

The outputs of the LPFs 607 and 608 are input to an AGC circuit 614. The AGC circuit 614 compares, for example, the amplitude of the input signal with a reference value, thereby to control the gain of the amplifier 603 so that the amplitude of the input signal can be identical to the reference value. As a result, the amplitude of signals output from the LPFs 607 and 608 are made constant.

The outputs of the LPFs 607 and 608 are input to an AFC (Auto Frequency Control) circuit 615. The AFC circuit 615 detects, from the input signals, deviation in frequency at the time of the quadrature detection, and controls the detection frequency of the orthogonal wave detector 606 on the basis of the detection result, thereby to stabilize the output of orthogonal wave detector 606.

Further, the outputs of the LPFs 607 and 608 are supplied to a timing reproduction circuit 616. In the timing reproduction circuit 616, the quadrature detection signals from the LPFs 607 and 608 are supplied to a null symbol detection circuit 617 and a correlation circuit 619, respectively.

The null symbol detection circuit 617 detects a null symbol as a front end portion of the frame of the input signal, and supplies a timing signal generation circuit 618 with a timing signal indicative of the detected timing of the null symbol. At this time, the timing signal generation circuit 618 performs rough synchronization of the detected symbol timing generated in the receiver.

The correlation circuit 619 receives the time-base data of a sine sweep signal output from a reference symbol generator 621, and calculates the correlation between the received data and the signals from the LPFs 607 and 608 thereby to detect the timing of a sine sweep symbol as a second portion of the frame. A timing signal indicative of the detected timing is supplied to the timing signal generation circuit 618. At this time, the timing signal generation circuit 618 supplies each circuit 609 - 613 with a symbol timing signal synchronous with the input signal.

The output of the correlation circuit 619 is also supplied to a clock reproduction circuit 620, where a clock synchronous with the input signal is reproduced and supplied to each of the circuits 605 - 613.

That data included in the control data decoded by the error-correcting/decoding unit 613, which indicates the number of the carriers of the received OFDM signal, is input to a control circuit 622. The control circuit 622 controls data generated by the reference symbol generation circuit 621 on the basis of the number of the carriers of the received OFDM signal. As a result, the reference symbol generation circuit 621 selectively outputs one of the sine sweep wave of an OFDM signal with 1536 carriers (shown in FIGS. 8A and 8B) and the sine sweep wave of an OFDM signal with 384 carriers (shown in FIGS. 10A and 10B).

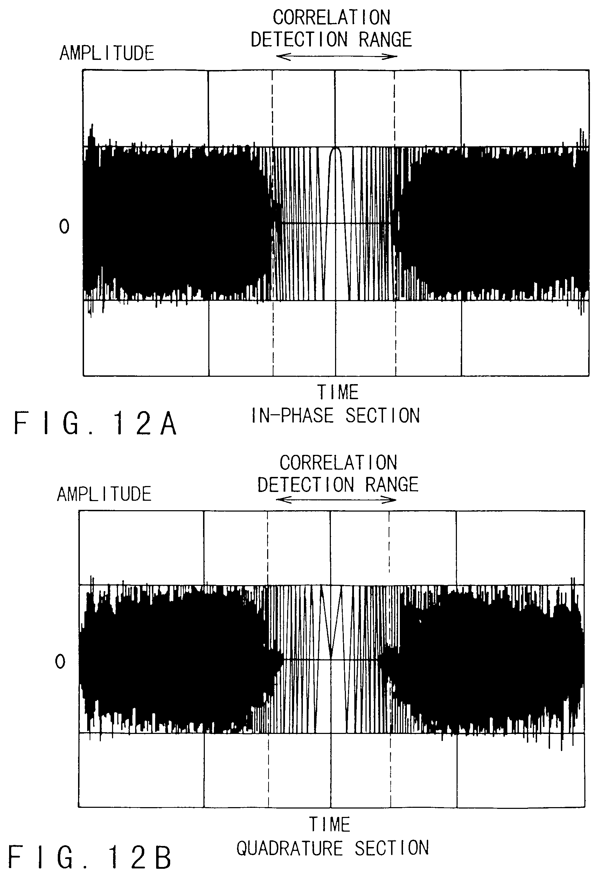

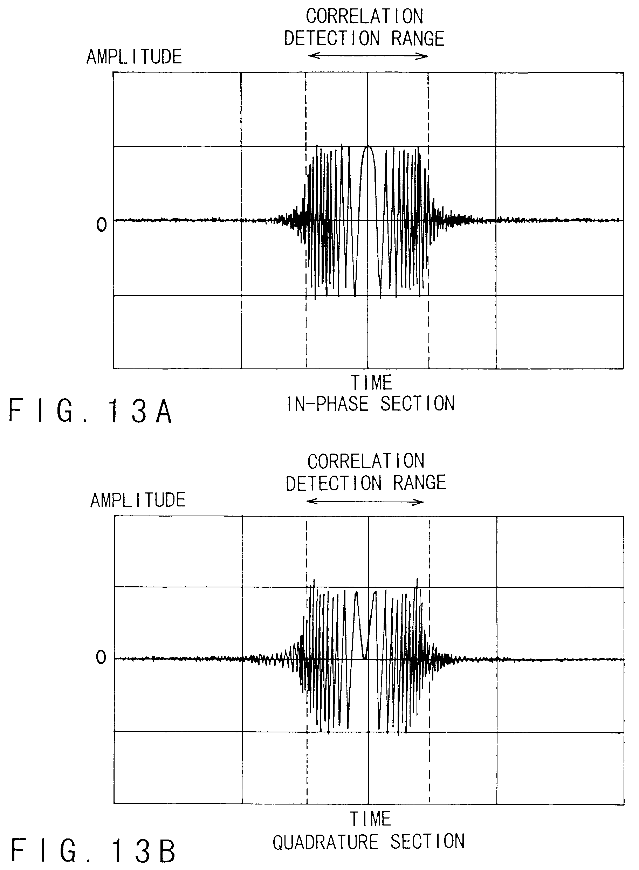

The operation of the control circuit 622 will be described in more detail, referring further to the sine sweep wave of an OFDM signal with 1536 carriers shown in FIGS. 12A and 12B and the sine sweep wave of an OFDM signal with 384 carriers shown in FIGS. 13A and 13B.

Since at the start of the timing synchronization, it is not determined whether the received OFDM signal is a 384-carrier one or a 1536-carrier one, timing synchronization is performed first for the OFDM signal with 384 carriers. Specifically, the reference symbol generation circuit 621 generates only a signal which falls within the correlation detection range shown in FIG. 13A (showing the in-phase section) and FIG. 13B (showing the quadrature section). The correlation circuit 619 performs correlation detection within the range.

Since the two sine sweep wave signals are substantially identical to each other in the correlation detection ranges shown in FIGS. 12A, 12B, 13A and 13B, the symbol timing can be detected by detecting the correlation between the input signal and a common reference signal, irrespective of whether the input signal is the 384-carrier signal or the 1536-carrier signal.

When the symbol timing has been detected, FFT demodulation can be performed on the basis of the detected symbol timing. That data included in the demodulated control data which indicates the number of the carriers is input to the control circuit 622. When the number of the carriers of the received OFDM signal is 1536, the control circuit 622 outputs a control signal so as to make the output of the reference symbol generation circuit 621 cover the overall signal shown in FIG. 7. As a result, in the case where the number of the carriers is 1536, correlation concerning the overall one symbol can be detected, thereby reducing the influence of noise, etc.

Thus, the above-described OFDM receiver can detect the symbol timing of a received OFDM signal by means of a single common circuit incorporated therein, irrespective of whether the received OFDM signal is one with 1536 carriers or one with 384 carriers, using the fact that the two sine sweep signals of the OFDM signals have a common time-base wave in the correlation detection range.

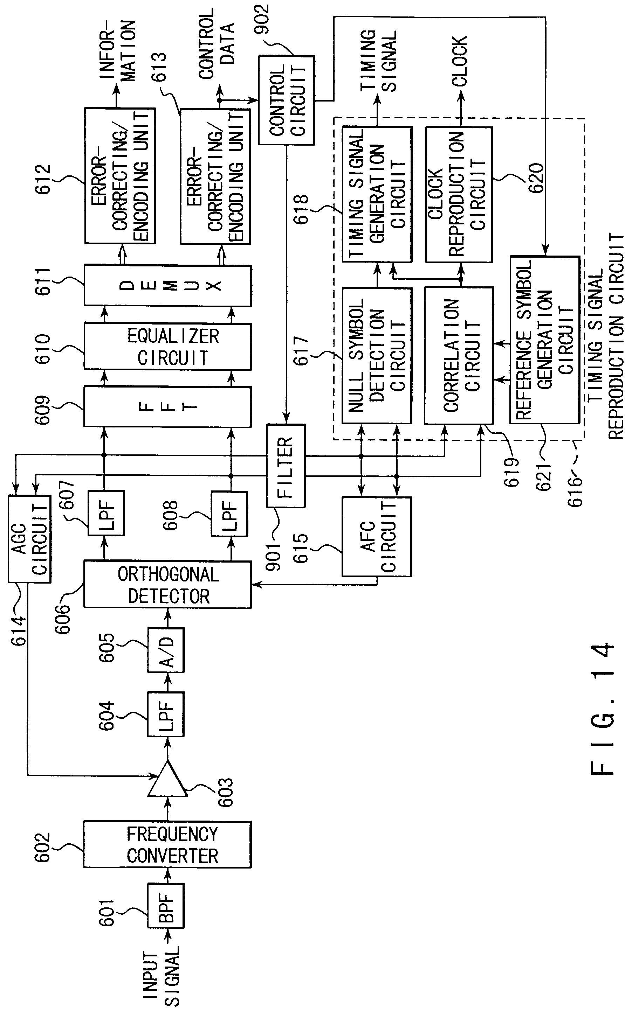

FIG. 14 is a block diagram, showing another example of the OFDM receiver according to the invention. In FIG. 14, elements similar to those in FIG. 11 are denoted by corresponding reference numerals, and no detailed explanation will be given thereof.

The OFDM receiver shown in FIG. 14 differs from the receiver shown in FIG. 11 in that in the former, the outputs of the LPFs 607 and 608 are subjected to the auto frequency control (AFC) and the timing detection after they are passed through a filter 901. The operation of the filter 901 will be described below.

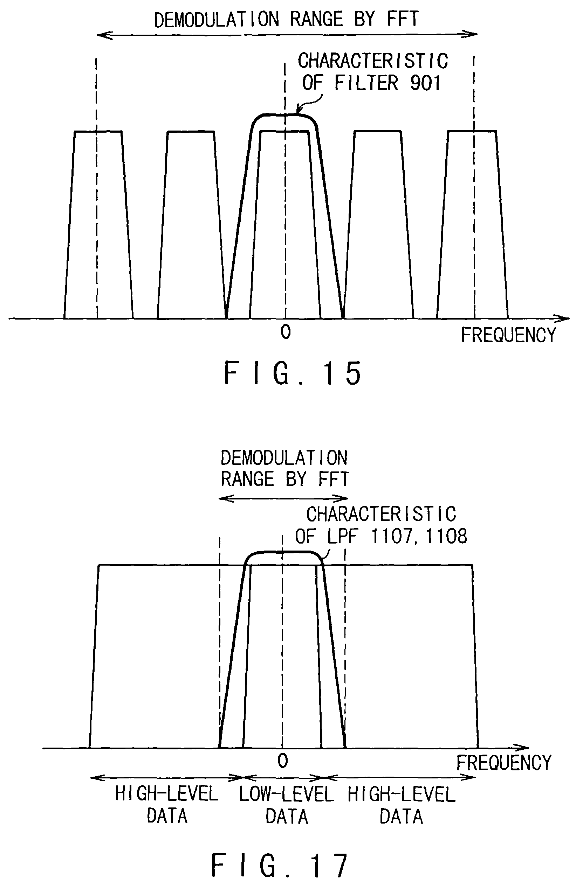

Where an OFDM signal of a narrow band is received by a receiver for receiving an OFDM signal of a wide band, it is considered that a signal in a channel adjacent to a target channel can be included in a demodulation range by the FFT, as is shown in FIG. 15. To receive a signal in the target channel, it suffices if only signals in the target channel are selected from the outputs of the FFT circuit 609. However, since the AFC circuit 615 and the timing signal reproduction circuit 616 use the time-base data of the OFDM signal, a signal in the adjacent channel may well be included. To remove such an adjacent-channel signal, the filter 901, which has characteristics as shown in FIG. 15, is used.

A control circuit 902 employed in this receiver switches the output of the reference symbol generator in accordance with the band width of the received OFDM signal as in the FIG. 11 case, and also controls the on/off-states of the filter 901.

At the start of the timing detection, the detection is performed with the filter 901 set in the on-state by a control signal from the control circuit 902. If it is determined from the demodulated control data, after the completion of the timing detection, that the received OFDM signal is a signal of a wide band, the timing detection can be performed using the overall signal band, and therefore the filter 901 is made to be off-state by a control signal from the control circuit 901.

Thus, the OFDM receiver constructed as above can detect the symbol timing of each of an OFDM signal with 1536 carriers and an OFDM signal with 384 carriers, using a single common circuit, and also can reduce the influence of an adjacent-channel signal upon the auto frequency control (AFC) or the timing detection.

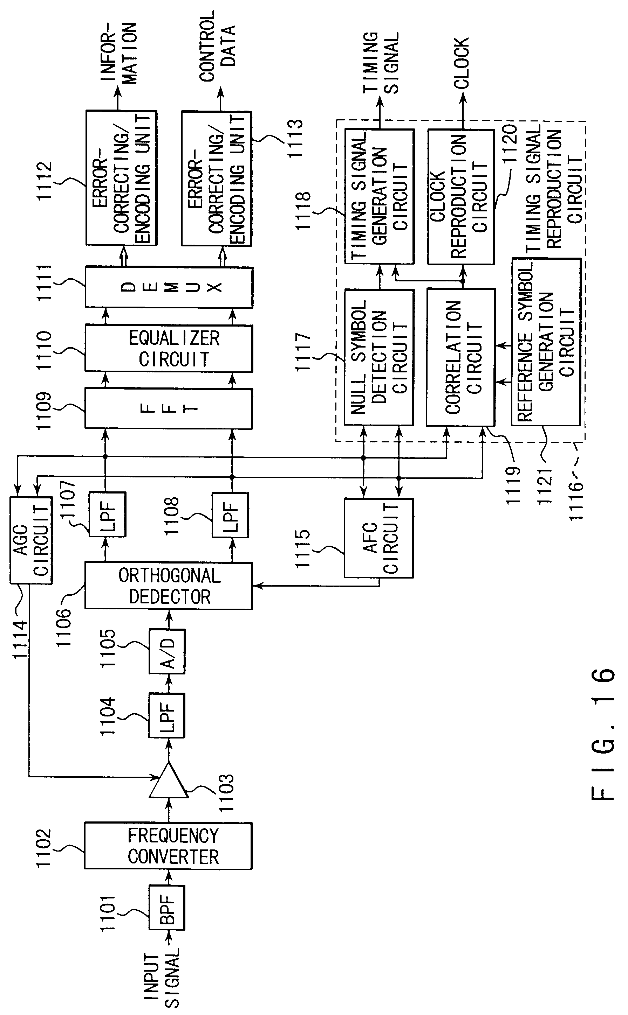

FIG. 16 is a block diagram, showing a further example of the OFDM receiver according to the invention. This OFDM receiver has a 512-point FFT circuit, and can demodulate an OFDM signal with 384 carriers. Further, concerning an OFDM signal with 1536 carriers, the OFDM receiver can demodulate that center portion of the 1536-carrier OFDM signal which includes 384 carriers.

In FIG. 16, a signal input to the receiver is converted by a frequency converter 1102 to have a predetermined frequency, after a component other than a predetermined band is removed therefrom by a BPF 1101 corresponding to a transmission channel with 384 carriers. The output of the frequency converter 1102 is amplified by an amplifier 1103, then subjected to band limitation using an LPF 1104, and converted to a digital signal by an A/D converter 1105. The output of the A/D converter 1105 is input to an orthogonal wave detector 1106.

The orthogonal wave detector 1106 subjects the input signal to quadrature detection using a reproduced carrier, and outputs an OFDM modulated wave of a base band. An in-phase-base signal (I-base signal) and a quadrature-base signal (Q-base signal) obtained by the orthogonal wave detector 1106 are subjected to band limitation using LPFs 1107 and 1108, respectively.

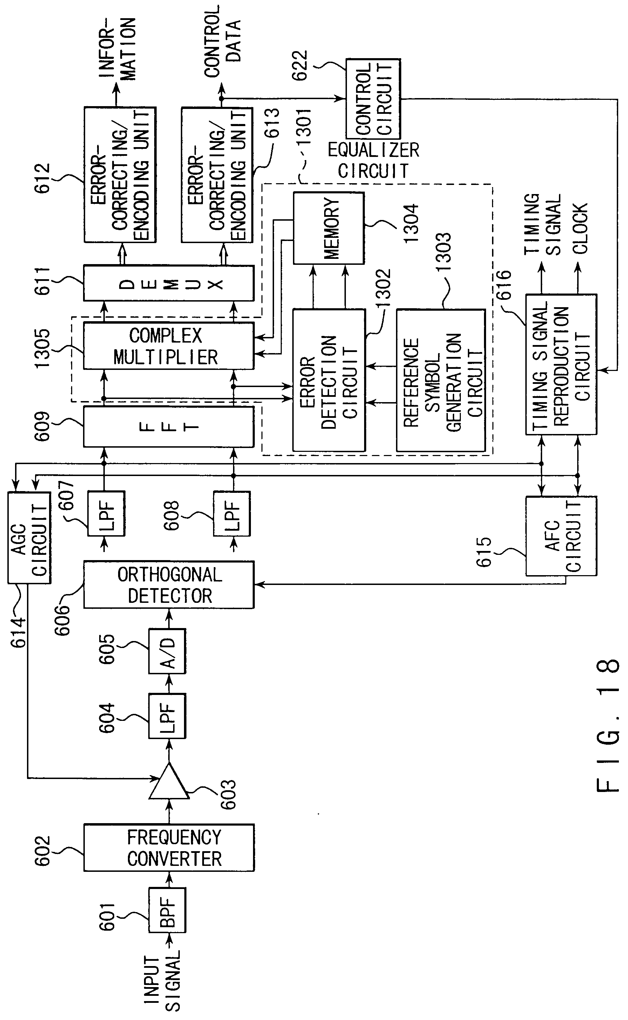

Referring then to FIG. 17, the operations of the LPFs 1107 and 1108 will be described in more detail. Suppose, for example, that the center portion of the OFDM signal with 1536 carriers, which has 384 carriers, includes high priority data. To demodulate the high priority data by the 512-point FFT circuit, the OFDM signal is subjected to band limitation using the LPFs 1107 and 1108 with characteristics as shown in FIG. 17. The characteristics of the LPFs 1107 and 1108 is set such that data carried by the 384 carriers located at a center portion of the OFDM signal will not be folded over when the OFDM signal is demodulated by 512-point FFT.

The outputs of the LPFs 1107 and 1108 are input to a 512-point FFT circuit 1109, and symbol data carried by each carrier is demodulated. The output of the FFT circuit 1109 has its deviation in amplitude and phase due to transmission line characteristics corrected by an equalizer circuit 1110. Further, information symbols and a control symbol included in the output are extracted and output by a demultiplexer (DEMUX) 1111.

The information symbols extracted by the demultiplexer 1111 are decoded by an error-correcting/decoding unit 1112 and output as information signals. The control symbol from the demultiplexer 611 is input to an error-correcting/decoding unit 1113, which in turn decodes the control symbol and outputs the decoded symbol as the control data.

The outputs of the LPFs 1107 and 1108 are input to an AGC circuit 1114. The AGC circuit 1114 compares, for example, the amplitude of the input signal with a reference value, thereby to control the gain of the amplifier 1103 so that the amplitude of the input signal can be identical to the reference value. As a result, the amplitude of the signals output from the LPFs 1107 and 1108 are made constant.

The outputs of the LPFs 1107 and 1108 are also supplied to an AFC circuit 1115. The AFC circuit 1115 detects deviation in frequency at the time of the quadrature detection, and controls the detection frequency of the orthogonal wave detector1106 on the basis of the detection result, thereby to stabilize the output of orthogonal wave detector 1106.

The outputs of the LPFs 1107 and 1108 are further supplied to a timing reproduction circuit 1116. In the timing reproduction circuit 1116, the quadrature detection signals from the LPFs 1107 and 1108 are supplied to a null symbol detection circuit 1117 and a correlation circuit 1119, respectively.

The null symbol detection circuit 1117 detects a null symbol as a front end portion of the frame of the received OFDM signal, and supplies a timing signal generating circuit 1118 with a timing signal indicative of the detected timing of the null symbol. At this time, the timing signal generation circuit 1118 roughly synchronizes a clock generated in the receiver with the detected symbol timing.

The correlation circuit 1119 receives the time-base data of a sine sweep signal output from a reference symbol generator 1121, and obtains the correlation between the received data and the signals from the LPFs 1107 and 1108 thereby to detect the timing of a sine sweep symbol as a second portion of the frame.

The reference symbol generation circuit 1121 generates a sine sweep signal falling within the range shown in FIGS. 13A and 13B. Thus, the correlation circuit 1119 can detect the correlation between the sine sweep symbol included in the received OFDM signal and a sine sweep wave included in the clock generated in the receiver, irrespective of whether the received OFDM signal is one with 1536 carriers or one with 384 carriers.

A timing signal indicative of the timing of the sine sweep symbol detected by the correlation circuit 1119 is supplied to the timing signal generation circuit 1118. At this time, the timing signal generation circuit 1118 supplies each circuit 1109 - 1113 with a symbol timing signal synchronous with the input signal.

The output of the correlation circuit 1119 is also input to a clock reproduction circuit 1120, where a clock synchronous with the input signal is reproduced and input to each of the circuits 1105 - 1113. (The clock frequency is 1/4 of that assumed in the FIG. 11 case.)

The above-described OFDM receiver having the 512-point FFT circuit and capable of demodulating all data in an OFDM signal with 384 carriers can also demodulate that portion of data in an OFDM signal with 1536 carriers which is carried by 384 carriers located at a center portion of the OFDM signal, by detecting the timing of the OFDM signal using a common circuit.

FIG. 18 is a block diagram, showing yet another example of the OFDM receiver of the invention. In FIG. 18, elements similar to those in FIG. 11 are denoted by corresponding reference numerals, and only different elements will be described below.

Since the amplitude and the phase of a sine sweep signal as the frequency-base data are known, it can be used as a reference symbol for equalization of each carrier. The receiver shown in FIG. 18 has a 2048-point FFT circuit 609 as in the receiver of FIG. 11, and can demodulate both an OFDM signal with 1536 carriers and an OFDM signal with 384 carriers. This receiver is characterized in that a sine sweep signal is used as an equalization reference symbol in an equalizer circuit 1301.

In the equalizer circuit 1301, the output of the FFT circuit 609 is supplied to a complex multiplier 1305 and also to an error detection circuit 1302. The error detection circuit 1302 receives the frequency-base data of the sine sweep signal of an OFDM signal with 1536 carriers (as shown in FIGS. 7A and 7B) generated by a reference symbol generation circuit 1303 and serving as reference data, and compares the reference data with the demodulated data of a sine sweep signal as a second portion of the frame of an OFDM signal, thereby detecting an error in each carrier to obtain a signal for correcting the error.

It is set on the transmitter side that the frequency-base data of the sine sweep signal of an OFDM signal with 384 carriers is included in the frequency-base data of the sine sweep signal of an OFDM signal with 1536 carriers. Accordingly, using the sine sweep signal of an OFDM signal with 1536 carriers as reference data enables error detection irrespective of whether the received signal is an OFDM signal with 1536 carriers or an OFDM signal with 384 carriers.

The output of the error detection circuit 1302 is stored in a memory 1304, and supplied to the complex multiplier 1305 at a predetermined point of time. The complex multiplier 1305 inputs to the memory 1304 a correction signal for correcting data carried by a third portion of the frame of each carrier, and multiplies the correction signal by a signal from the FFT circuit 609, thereby equalizing each carrier.

Accordingly, the above-described OFDM receiver structure enables an OFDM receiver adapted to an OFDM signal with 1536 carriers to receive an OFDM signal with 384 carriers and to equalize a demodulated symbol on each carrier of the received signal using a common circuit. Moreover, the above-described OFDM receiver structure enables, using a common circuit, an OFDM receiver adapted to an OFDM signal with 384 carriers to receive an OFDM signal with 1536 carriers and to equalize a demodulated symbol on each of 384 carriers located at a center portion of the received OFDM signal.

The above-described embodiment employs, as examples of OFDM transmission systems with the same carrier interval and different band widths, two types of OFDM signals --an OFDM signal with 512 FFT points and 384 carriers, and OFDM signal with 2048 FFT points and 1536 carriers--. However, the invention is not limited to this.

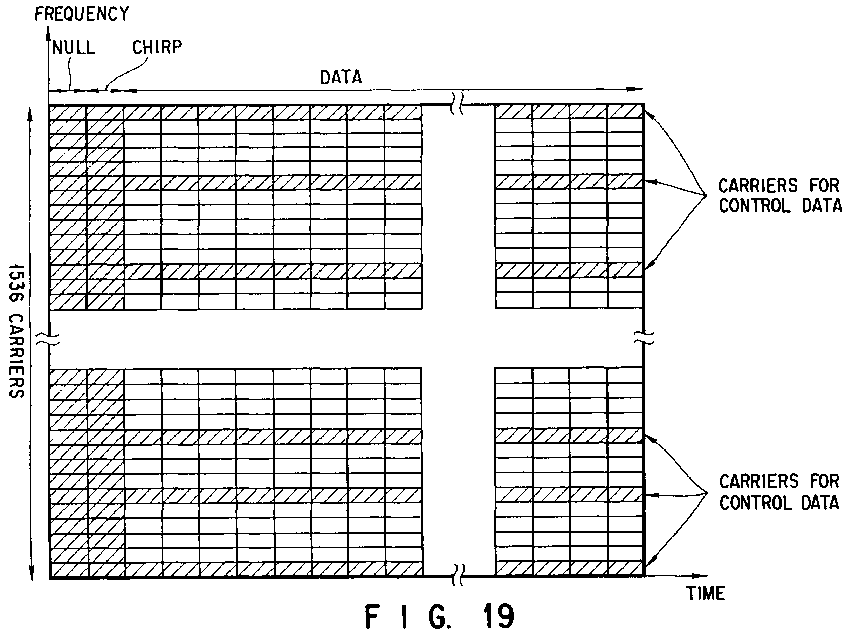

Further, it is considered as a transmission method of control data to assign the control data to a predetermined carrier included in the data symbol as shown in FIG. 19. Also in this case, the same advantage as above can be obtained by assigning the control data indicative of the number of carriers to 384 carriers located at a center portion of the OFDM signal.

As described above, even at the time of transmitting a plurality of OFDM signals of the same carrier interval and different band widths, the timing synchronization between each of OFDM signals received by the receiver and a clock generated in the receiver can be performed using a single common circuit. Moreover, equalization of each carrier can be performed using a single common circuit.

## Claims

1. An OFDM transmitter for transmitting one of OFDM (Orthogonal Frequency Division Multiplex) transmission signals of different systems with the same carrier interval and different band widths, including: reference symbol generation means (104) for generating, as a reference symbol, frequency-base data of a sine sweep signal waveform corresponding to a band width assigned to the reference symbol generation means; multiplexing means (105) for multiplexing the reference symbol output from the reference symbol generation means and a plurality of information symbols in the form of an OFDM transmission frame; OFDM modulation means (106) for subjecting the output of the multiplexing means to OFDM modulation to create an OFDM signal with a base band; quadrature modulation means (108) for subjecting to quadrature modulation the OFDM signal with the base band output from the OFDM modulation means; and transmission means (109, 110) for transmitting the output of the quadrature modulation means as the one OFDM transmission signal;
characterized in that the reference symbol generation means (104) generates, as the reference symbol, frequency-base data obtained by extracting part of the frequency-base data of a predetermined sine sweep signal waveform in accordance with the band width assigned to the reference symbol generation means so that a sine sweep signal included in the one OFDM transmission signal contains time-base data, part of which data is identical to part of time-base data contained in each of the other OFDM transmission signals of different systems.

2. The OFDM transmitter according to claim 1, characterized by further comprising control symbol generation means (102) for generating, as a control symbol, control data including data indicative of the band width of the one OFDM transmission signal, and characterized in that the multiplexing means (105) assigns the control symbol to a predetermined OFDM symbol included in the transmission frame, and also assigns the data indicative of the band width to a carrier with a narrowest band width contained in the OFDM transmission signals of different systems.

3. The OFDM transmitter according to claim 1, characterized by further comprising control symbol generation means (102) for generating, as a control symbol, control data including data indicative of the band width of the one OFDM transmission signal, and characterized in that the multiplexing means (105) assigns the control symbol to a predetermined carrier included in data symbol, and also assigns the control data indicative of the band width to a carrier with a narrowest band width contained in the OFDM transmission signals of different systems.

4. An OFDM receiver for selectively receiving one of OFDM (Orthogonal Frequency Division Multiplex) transmission signals of different systems, which have the same carrier interval, different band widths and sine sweep signals as reference symbols containing partially the same time-base data, characterized by comprising:
quadrature detection means (606) for subjecting a received one of the OFDM transmission signals of different systems to quadrature detection to thereby convert the received OFDM signal to an OFDM signal with a base band;
first filter means (607, 608) for performing band limitation of the output of the quadrature detection means (606) using a band width determined on the basis of the number of the Fourier transformation points at the time of OFDM demodulation;
time-base data generation means (621) for generating at least time-base data common to the sine sweep signals included in the OFDM transmission signals of different systems;
timing signal reproduction means (618 - 620) for detecting a sine sweep signal included in the received OFDM signal by detecting the correlation between the output of the first filter means (607, 608) and the output of the time-base data generation means (621), thereby reproducing, from the detected sine sweep signal, the symbol timing and the clock of the received OFDM signal; and
demodulation means (609 - 613) for subjecting the output of the filter means (607, 608) to Fourier transformation using the Fourier transformation points on the basis of the symbol timing and the clock reproduced by the timing signal reproduction means (618 - 620), thereby performing OFDM demodulation.

5. The OFDM receiver according to claim 4, characterized in that the time-base data generation means (621) selectively generates time-base data falling within a range of from the time-base data common to the sine sweep signals of the OFDM transmission signals of different systems, to time-base data of a sine sweep signal corresponding to the band width determined on the basis of the number of the Fourier transformation points;
and characterized by further comprising control means (622) for causing, at the start of timing detection, the time-base data generation means (621) to generate the time-base data common to the sine sweep signals of the OFDM transmission signals of different systems; determining, after obtaining a demodulated signal from the demodulation means (609 - 613), the band width of the received OFDM signal on the basis of the demodulated signal; causing the time-base data generation means (621) to generate time-base data of a sine sweep signal corresponding to a maximum band width assigned to the time-base data generation means, if the band width of the received OFDM signal is wider than the band width determined on the basis of the number of the Fourier transformation points; and causing the time-base data generation means (621) to generate time-base data of a sine sweep signal corresponding to the received OFDM signal, if the band width of the received OFDM signal is narrower than the band width determined by the number of the Fourier transformation points.

6. The OFDM receiver according to claim 4, characterized by further comprising second filter means (901) for performing selective band limitation of the output of the first filter means (607, 608) on the basis of each of those of the band widths of the OFDM transmission signals of different systems which are narrower than the band width determined by the number of the Fourier transformation points;
characterized in that:
the time-base data generation means (621) selectively generates time-base data falling within a range of from the time-base data common to the sine sweep signals of the OFDM transmission signals of different systems, to time-base data of a sine sweep signal corresponding to the band width determined on the basis of the number of the Fourier transformation points;
the timing signal generation means (618, 620) detects a sine sweep signal by detecting the correlation between the output of the second filter means (901) and the output of the time-base data generation means (616), thereby reproducing the symbol timing and the clock of the received OFDM signal on the basis of the detected sine sweep signal;
and characterized by further comprising:
control means (902) for causing, at the start of timing detection, the second filter means (901) to have the same band width as a minimum band width imparted to one of the OFDM transmission signals of different systems; causing the time-base data generation means (616) to generate the common time-base data; determining, after a demodulation signal is obtained from the demodulation means (609), the received OFDM transmission signal on the basis of the demodulation signal; and widening the band width of the second filter means (901) in accordance with the band width of the received OFDM transmission signal, if the band width of the received OFDM transmission signal is narrower than the band width determined on the basis of the number of the Fourier transformation points; and causing the time-base data generation means (616) to generate time-base data of a sine sweep signal corresponding to the received OFDM transmission signal.

7. The OFDM receiver according to claim 4, characterized by further comprising:
reference symbol generation means (1303) for generating frequency-base data of that sine sweep signal included in the sine sweep signals of the OFDM transmission signals, which has a widest band width narrower than the band width determined on the basis of the number of the Fourier transformation points;
equalization means (1302, 1304, 1305) for detecting an error in a demodulated symbol on each carrier on the basis of frequency-base data of a sine sweep signal demodulated by the demodulation means (609) and frequency-base data of a sine sweep signal obtained from the output of the reference symbol generation means, thereby equalizing the output of the demodulation means (609); and
control means (622) for determining the band width of the received OFDM transmission signal from the demodulation signal equalized by the equalization means (1302, 1304, 1305), thereby controlling the timing signal reproduction means so as to make the same comply with the band width;
and characterized in that
equalization is performed using a common reference symbol even when OFDM transmission signals of different widths are received.

8. The OFDM receiver according to claim 4,
characterized in that:
each of the OFDM transmission signals of different systems has an OFDM transmission frame which contains, in a multiplexing manner, a control symbol corresponding to control data including data indicative of a band width assigned to the each OFDM transmission signal;
and the data indicative of the band width is carried by a carrier of a narrowest band width in the OFDM transmission signals;
and characterized by further comprising:
decoder means (613) for decoding the data indicative of the band width and included in frequency data carried by the carrier of the narrowest band width, the control means determining the band width of the received OFDM transmission signal on the basis of the data obtained from the decoder means (613).
